# EUROPEAN PATENT APPLICATION

(11) **EP 4 848 602 A1**
(43) Date of publication of application: **02.12.2026**
(21) Application number: 25179813.8
(22) Date of filing: 30.05.2025
(51) Int. Cl.: H04B 5/48, H04B 5/79, H04B 1/10, H04B 1/30

(54) **A COMMUNICATION SYSTEM**

(71) Applicant: NXP B.V., 5656 AG Eindhoven (NL)
(72) Inventor: Feichtinger,, Mark, 5656 AG Eindhoven (NL); Mühlmann,, Ulrich Andreas, 5656 AG Eindhoven (NL)
(74) Representative: Krott, Michel

(57) **Abstract**

A radio-frequency communication system for near-field-communication (NFC) comprising: an input terminal which receives a load-modulation-signal from an NFC tag, which is configured to provide the load-modulation-signal by modulating a carrier signal of the radio-frequency communication system; a coherent decoder which applies a coherent decoding operation to the load-modulation-signal to provide a coherently-decoded signal; a non-coherent decoder which applies a non-coherent decoding operation to the load-modulation-signal to provide a non-coherently-decoded signal; and a selector. The selector receives the coherently-decoded signal and the non-coherently-decoded signal, determines a first confidence value for the coherently-decoded signal, and determines a second confidence value for the non-coherently-decoded signal. If the first confidence value is higher than the second confidence value, the selector provides the coherently-decoded signal as an output stream. If the second confidence value is higher than the first confidence value, the selector provides the non-coherently-decoded signal as the output stream.

## Description

### Field

The present disclosure relates to a radio-frequency communication system. In particular to a radio-frequency communication system suitable for near field communication.

### Summary

According to a first aspect of the present disclosure there is provided a radio-frequency, RF, communication system for near field communication, NFC, the system comprising: an input terminal configured to receive a load modulation signal from an NFC tag, wherein the NFC tag is configured to provide the load modulation signal by modulating a carrier signal of the RF communication system; a coherent decoder configured to apply a coherent decoding operation to the load modulation signal in order to provide a coherently decoded signal; a non-coherent decoder configured to apply a non-coherent decoding operation to the load modulation signal in order to provide a non-coherently decoded signal; and a selector configured to: receive the coherently decoded signal and the non-coherently decoded signal; determine a first confidence value for the coherently decoded signal and determine a second confidence value for the non-coherently decoded signal; and if the first confidence value is higher than the second confidence value, then the selector is configured to provide the coherently decoded signal as an output stream; or if the second confidence value is higher than the first confidence value, then the selector is configured to provide the non-coherently decoded signal as the output stream.

In one or more embodiments the RF communication system also comprises an ADC.

In one or more embodiments the ADC is configured to receive the load modulation signal from the input terminal.

In one or more embodiments the ADC is configured to provide a digital version of the load modulation signal to the coherent decoder and the non-coherent decoder.

In one or more embodiments, if the first confidence value is equal to the second confidence value, then the selector is configured to provide the coherently decoded signal as the output stream.

In one or more embodiments the selector is configured to determine the first and second confidence values based on one or more of: a parity check of each of the coherently decoded signal and the non-coherently decoded signal; an amplitude of the load modulation signal; a degree of similarity between a section of each of the coherently decoded signal and the non-coherently decoded signal and an expected section of an expected signal; and a cyclic redundancy check of each of the coherently decoded signal and the non-coherently decoded signal.

In one or more embodiments the non-coherent decoder is an edge detector.

In one or more embodiments the non-coherent decoder is an envelope detector.

In one or more embodiments the selector is configured to continuously determine and compare the first and second confidence values such that the selector can change the output stream from one decoded signal to the other decoded signal immediately if there is a change in which of the confidence values is higher.

In one or more embodiments the RF communication device is an NFC communication device.

According to a further aspect of the present disclosure there is provided a method of operating a radio-frequency, RF, communication system for near field communication, NFC, wherein the method comprises: applying a coherent decoding operation to a load modulation signal in order to provide a coherently decoded signal; applying a non-coherent decoding operation to the load modulation signal in order to provide a non-coherently decoded signal; determining a first confidence value for the coherently decoded signal and determining a second confidence value for the non-coherently decoded signal; and if the first confidence value is higher than the second confidence value, then providing the coherently decoded signal as an output stream; or if the second confidence value is higher than the first confidence value, then providing the non-coherently decoded signal as the output stream.

In one or more embodiments the method further comprises converting the load modulation signal from an analogue signal to a digital version of the load modulation signal.

In one or more embodiments the method further comprises applying the coherent decoding operation and the non-coherent decoding operation to the digital version of the load modulation signal.

In one or more embodiments, if the first confidence value is equal to the second confidence value, then the method further comprises providing the coherently decoded signal as the output stream.

In one or more embodiments the step of determining the first and second confidence values includes determining the first and second confidence values based on one or more of: a parity check of each of the coherently decoded signal and the non-coherently decoded signal; an amplitude of the load modulation signal; a degree of similarity between a section of each of the coherently decoded signal and the non-coherently decoded signal and an expected section of an expected signal; and a cyclic redundancy check of each of the coherently decoded signal and the non-coherently decoded signal.

In one or more embodiments the non-coherent decoding operation is an edge detection operation.

In one or more embodiments the non-coherent decoding operation is an envelope detection operation.

In one or more embodiments the method further comprises continuously determining and comparing the first and second confidence values and changing the output stream from one decoded signal to the other decoded signal immediately if there is a change in which of the confidence values is higher.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example PCD and PICC communication link and the relationship between load modulation on the received RF field and the baseband ADC signal;
Figure 2 shows an RF communication system according to an embodiment of this disclosure;
Figure 3 shows how the RF communication system of Figure 2 can extend the dynamic range of an RF communication system in high LMA scenarios;
Figure 4 shows an example process flow for operating the RF communication system according to an embodiment of the present disclosure; and
Figure 5 shows a method of operating an RF communication system according to one or more embodiments of the present disclosure.

### Detailed Description

In near-field communication (NFC) systems, a proximity coupling device (PCD), i.e. the reader or wireless charging device, is magnetically coupled with a proximity integrated circuit card (PICC), i.e. a tag or energy receiving device. In order to exchange information, the PICC modulates a radio frequency (RF) carrier signal emitted by the PCD, often by connecting and disconnecting a load to a transponder antenna of the PICC, for example. The NFC wireless charging (WLC) standard by NFC Forum extends the pure communication purpose of NFC to wireless charging. In this case, a WLC-Poller (WLC-P) uses an NFC communication link to charge small NFC enabled devices, called WLC-Listener (WLC-L).

For the load modulation of a specified subcarrier (for example, 848 kHz) from the PICC to the PCD, various standards define a minimal modulation strength (such as 6% in the ISO/IEC 14443 or 10mV for ISO/IEC 15693). However, the maximal modulation depth is not defined (or is defined to be up to 100%) as this is limited by the system design. The system limitation of the modulation depth depends on various factors including:
- Antenna and matching network of the PCD and PICC (e.g., antenna Q);
- Coupling between PCD and PICC antennas; and
- Distance between the devices.

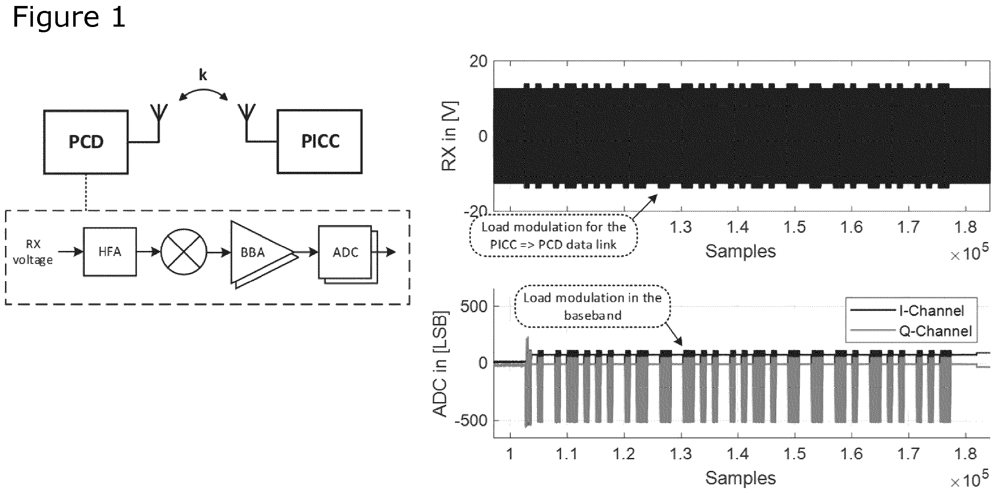

Figure 1 shows an example PCD and PICC communication link and the relationship between load modulation on the received RF field and the baseband ADC signal.

All standards define test procedures for PICC to PCD communication link testing. As such, system designers often focus on increasing the sensitivity of their systems, instead of considering instances with very high modulation depth. If the load modulation amplitude (LMA) for the PICC to PCD communication is very high, state-of-the-art PCDs have very sophisticated gain regulation techniques to lower this amplitude (for example by reducing the base band amplifier (BBA) gain) in order to keep the signal within the dynamic range of the ADC. Unfortunately, this gain regulation takes time and often takes effect too late to ensure a successful communication in the first instance and so retries are usually necessary. Although it is true that the communication typically has a higher probability of success after a retry (with lower BBA gain, for example), there is still no guarantee. If the LMA is very high, the limited dynamic range of the ADC will always cut off the signal peaks and as such the state-of-the-art receiver (RX) will fail.

The following disclosure describes an RF communication system with an extended dynamic range in order to maintain successful communications in high LMA scenarios.

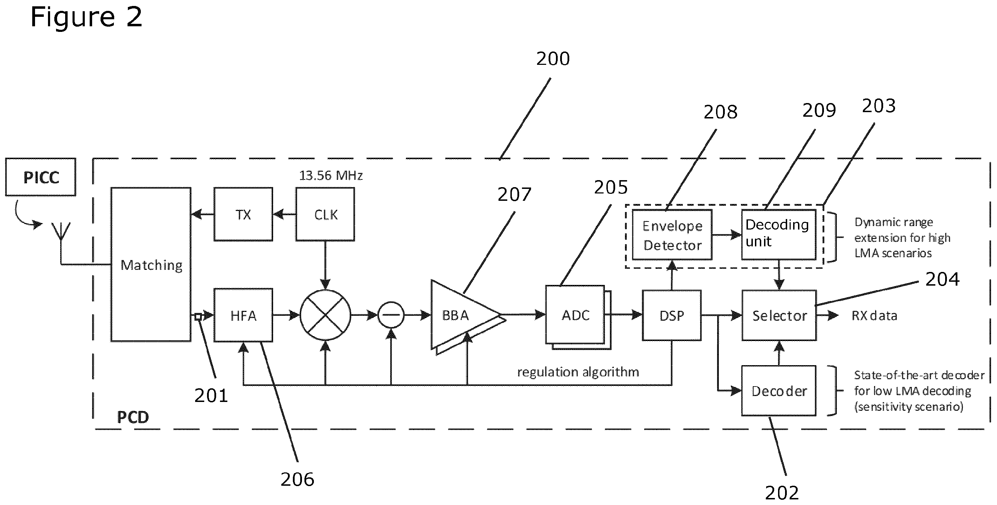

Figure 2 shows an RF communication system (PCD) according to an embodiment of this disclosure. The RF communication system 200 includes an input terminal 201 configured to receive a load modulation signal from an NFC tag (PICC), as described above. The RF communication system 200 also includes a coherent decoder 202 configured to apply a coherent decoding operation to the load modulation signal in order to provide a coherently decoded signal, a non-coherent decoder 203 configured to apply a non-coherent decoding operation to the load modulation signal in order to provide a non-coherently decoded signal, and a selector 204.

A coherent decoder, such as the coherent decoder 202 of the RF communication system 200, is a decoder which uses both the phase and amplitude of a received signal in order to interpret information. In order to ensure phase alignment, a reference signal is often used for coherent decoding. A non-coherent decoder, such as the non-coherent decoder 203 of the RF communication system 200, is a decoder which does not consider the phase of the received signal. Because phase alignment is not required, no reference signals are required, and a non-coherent decoder is able to interpret information using only the received signal itself.

The selector 204 is configured to receive the coherently decoded signal and the non-coherently decoded signal, determine a first confidence value for the coherently decoded signal and determine a second confidence value for the non-coherently decoded signal. As will be discussed in detail below, the first and second confidence values represent the likelihood that each decoded signal correctly matches the original load modulation signal. If the first confidence value is higher than the second confidence value, then the selector 204 is configured to provide the coherently decoded signal as an output stream. If the second confidence value is higher than the first confidence value, then the selector 204 is configured to provide the non-coherently decoded signal as the output stream.

In this way, the selector 204 can ensure that the RF communication system uses the most appropriate decoder 202, 203 at any given time, based on the load modulation signal. Coherent decoders best suited for low amplitude scenarios, as they can accurately interpret small signal variations due to the phase coupling. However, if the signal amplitude is too high, then a coherent decoder may not be able to correctly interpret information, thereby leading to failed communications. Non-coherent decoders are typically less precise than coherent decoders, but are better suited for high amplitude signals since the additional phase information is not required. NFC applications typically utilise signals with very small variations, and as such the use of non-coherent decoders is not contemplated in the art. However, the inventors have found that the techniques described herein advantageously greatly increase the chances of first try successful communications. Furthermore, the above-described techniques are not incompatible with conventional gain regulation techniques. Therefore, such gain regulation may be implemented in tandem with the above-described techniques in order to ensure that the coherent decoder 202 can interpret future signals, thereby providing an improved level of accuracy for future signals whilst also improving the chances of a successful first-try communication.

In some embodiments, the RF communication system 200 also includes an ADC 205. In these embodiments, the ADC 205 is configured to receive the load modulation signal from the input terminal 201 and the ADC 205 is configured to provide a digital version of the load modulation signal to the coherent decoder 202 and the non-coherent decoder 203. ADCs each have a limited dynamic range for digital conversion of signals. Therefore, which of the decoders (that is, the non-coherent decoder or the coherent decoder will be most appropriate can be determined by the dynamic range of the ADC 205, as will be discussed below.

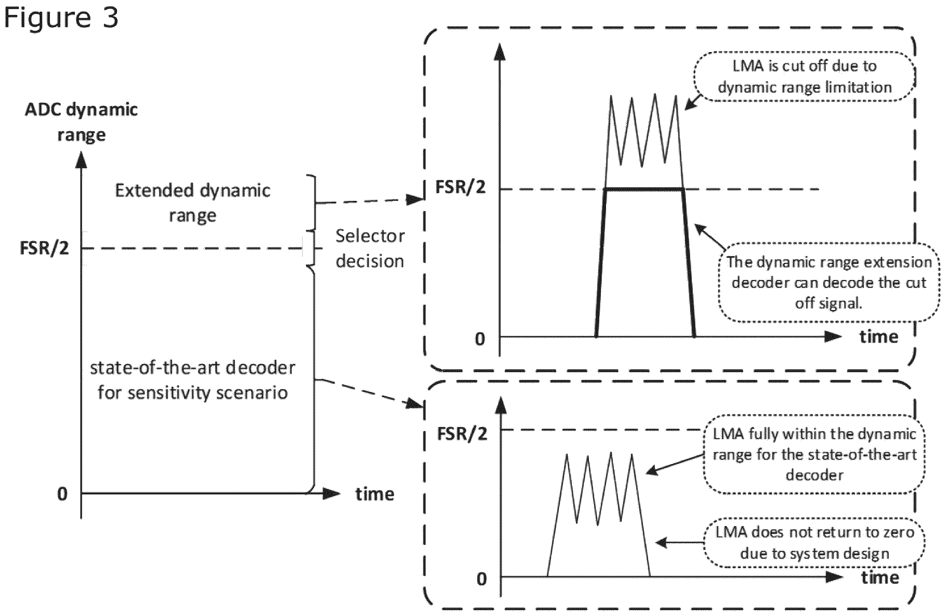

Figure 3 shows how the RF communication system of Figure 2 can extend the dynamic range of an RF communication system in high LMA scenarios. On the left-hand side of the figure, the general dynamic range of an ADC is shown from 0 to half of the full-scale range (FSR). For simplicity, Figure 3 focuses only on the upper half of the FSR. A state-of-the-art RF communication system can provide accurate decoding only if the LMA falls within the FSR of the ADC. Sophisticated regulation algorithms can be used to handle DC offset cancellation to try to keep the LMA within the FSR. This can be implemented by high frequency attenuators (HFA) and base band amplifiers (BBA) (shown in Figure 2 with reference numerals 206 and 207 respectively) for example. However, it is not always possible to keep the LMA within the FSR, and even if it is then there can be a delay in achieving the reduction in the LMA. An example scenario wherein the LMA falls within the FSR is shown on the bottom right of Figure 3. In this scenario, the LMA is fully within the dynamic range of the coherent decoder.

Typically, an RF communication system is in a configuration in which it is tuned for maximum sensitivity, with an aim to detect and communicate with possible counterparts at the largest possible distance. The antenna and system design of said counterparts influence the shape and the strength of the LMA. It is possible for the LMA to be completely outside of the FSR of the ADC if, for example, the LMA is too high at the start of the communication. As a result, the communication will fail and need to be repeated. An example scenario wherein the LMA is cut off due to the dynamic range limitation the ADC is shown on the top right of Figure 3.

In the large LMA scenario, even though the peak of the signal falls outside of the dynamic range of the ADC and some detail is lost to clipping, the non-coherent decoder of Figure 2 is able to interpret information from the remaining output signal of the ADC (shown by the thick line in Figure 3). In this way, the non-coherent decoder can be considered a dynamic range extension decoder which is able to decode the cut off signal. By contrast, the coherent decoder of Figure 2 is not able to interpret information from the remaining output signal because more information is needed by the coherent decoder. This "more information" is provided as the peaks in the load modulation signal which are shown to be within the FSR of the ADC in the bottom right of Figure 3, and outside of the FSR of the ADC in the top right of Figure 3. The example peaks which fall outside of the FSR (as shown in the top right of Figure 3) are invisible to the decoders as the ADC cannot represent them digitally, the peaks are merely shown in the figure to illustrate the missing information. Therefore, in this way, the RF communication device according to embodiments of the present disclosure can effectively extend the dynamic range of the RF communication device, thereby increasing the success rate of first-time communications.

As shown on the left-hand side of the figure, scenarios wherein the LMA is within the FSR of the ADC may be considered the 'sensitivity scenario' to be interpreted by the coherent decoder, scenarios beyond the FSR may be considered 'extended dynamic range scenarios to be interpreted by the non-coherent decoder, and scenarios at or close to the FSR limits (i.e., FSR/2 and -FSR/2) can be interpreted by either decoder, based on a decision made by the selector.

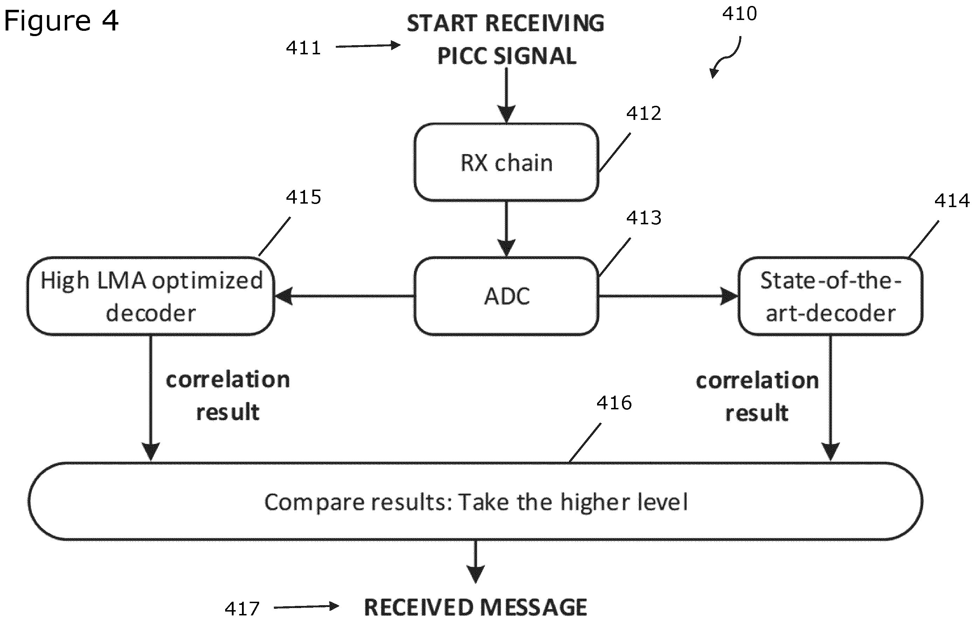

Figure 4 shows an example process flow 410 for operating an RF communication system according to an embodiment of the present disclosure, such as the one of Figure 2. First, at step 411, a load modulation signal is received from an NFC tag at the input terminal. The load modulation signal is then optionally processed by one or more components in an RX chain 412 (such as an HFA and a BBA, as discussed above) and provided to an ADC 413. The ADC 413 then provides a digital version of the load modulation signal to the coherent decoder 414 and the non-coherent decoder 415. The coherent decoder 414 can be a known state-of-the-art decoder that is used in RF communication systems. The use of the non-coherent decoder 415 can be used for high load modulation signals with high amplitudes, as discussed above, and therefore it can be considered as being optimized for high-amplitude load modulation signals that are not as readily processable by the coherent decoder 414. Each decoder 414, 415 provides a respective decoded signal to the selector. The selector, at step 416, determines a first confidence value for the coherently decoded signal and a second confidence value for the non-coherently decoded signal and compares the confidence values. The selector then provides the decoded signal with the highest confidence value as an output stream 417. This output stream 417 is identified as a received message in Figure 4. This process flow 410 may be implemented as a continuous process, such that the selector is configured to continuously determine and compare the first and second confidence values such that the selector can change the output stream from one decoded signal to the other decoded signal immediately if there is a change in which of the confidence values is higher.

The confidence values used for decoder selection can be determined in any suitable way, for example the first and second confidence values may be based, in whole or in part, on one or more of:
- a parity check of each of the coherently decoded signal and the non-coherently decoded signal;
- an amplitude of the load modulation signal;
- a degree of similarity between a section of each of the coherently decoded signal and the non-coherently decoded signal and an expected section of an expected load modulation signal;
- a cyclic redundancy check of each of the coherently decoded signal and the non-coherently decoded signal;
- signals from RX chain components; and
- any other suitable factors.

For example, the first and second confidence values may be based on the above factors in the following ways:
- a successful parity check may increase the first or second confidence value such that, if one decoded signal passes a parity check and the other decoded signal fails a parity check, the selector may select the decoder that provided the respective successful decoded signal;
- if the amplitude of the load modulation signal is above a high threshold, then the second confidence may be increased and / or the first confidence value may be decreased;
- if the load modulation signal contains a section of information which is known to the RF communication system, then the first and second confidence values may be increased in response to detecting a greater degree of similarity between the expected section and the respective section of the coherently decoded signal and the non-coherently decoded signal;
- a successful cyclic redundancy check may increase the first or second confidence value such that, if one decoded signal passes a cyclic redundancy check and the other decoded signal fails a cyclic redundancy check, the selector may select the decoder that provided the respective successful decoded signal; and
- if both receiver paths have suitable matched filters, the confidence values can be determined from the filter outputs of both of the matched filters.

In some examples, the selector can determine the confidence values from one or both of the decoded signals. In other examples, one or both of the decoders can provide its associated confidence value as part of the decoded signal that it provides to the selector.

The non-coherent decoder may be any suitable non-coherent decoder, for example an edge detector or an envelope detector. In some embodiments, the non-coherent decoder includes an envelope detector and a non-coherent decoding unit (see reference numerals 203, 208 and 209 in Figure 2). The load modulation signal may use Manchester coding. Therefore, the non-coherent decoder and / or envelope detector can correctly interpret information from the load modulation signal, even when the digital version of the load modulation signal is clipped.

The coherently decoded signal can include more detail than the non-coherently decoded signal because of the way in which the interpretation is executed. As such, the coherently decoded signal may be considered preferable to the non-coherently decoded signal if they are both available. Nonetheless, the non-coherently decoded signal will be preferable in circumstances in which the coherently decoded signal is unavailable or otherwise inaccurate. Therefore, in some embodiments, if the first confidence value is equal to the second confidence value, then the selector may be configured to provide the coherently decoded signal as the output stream.

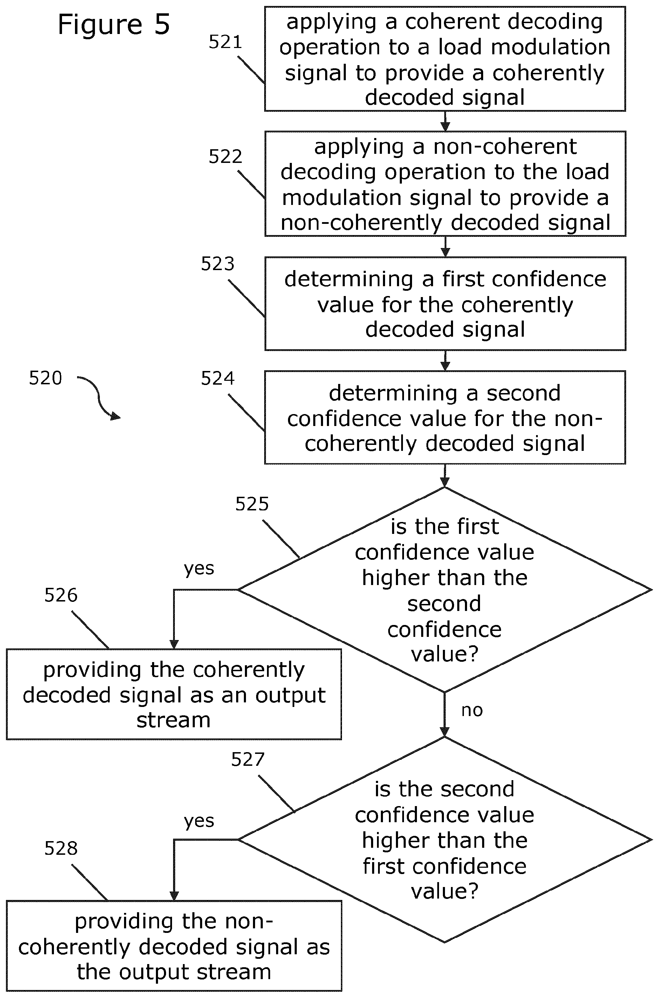

Figure 5 shows a method 520 of operating an RF communication system according to one or more embodiments of the present disclosure. The method 520 includes, at step 521, applying a coherent decoding operation to a load modulation signal in order to provide a coherently decoded signal, and, at step 522, applying a non-coherent decoding operation to the load modulation signal in order to provide a non-coherently decoded signal. Next, the method 520 includes, at step 523, determining a first confidence value for the coherently decoded signal and, at step 524, determining a second confidence value for the non-coherently decoded signal. It will be appreciated that steps 521 and 522 do not need to be performed sequentially, as shown in the drawing. Instead, they could be performed in parallel. The same is true of steps 523 and 524.

If the first confidence value is higher than the second confidence value, as assessed at step 525, then the method 520 includes providing, at step 526, the coherently decoded signal as an output stream. If the second confidence value is higher than the first confidence value, as assessed at step 527, then the method includes providing, at step 528, the non-coherently decoded signal as the output stream.

In some embodiments, the RF communication system is an NFC communication device.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A radio-frequency, RF, communication system for near field communication, NFC, the system comprising:
an input terminal configured to receive a load modulation signal from an NFC tag, wherein the NFC tag is configured to provide the load modulation signal by modulating a carrier signal of the RF communication system;
a coherent decoder configured to apply a coherent decoding operation to the load modulation signal in order to provide a coherently decoded signal;
a non-coherent decoder configured to apply a non-coherent decoding operation to the load modulation signal in order to provide a non-coherently decoded signal; and
a selector configured to:
receive the coherently decoded signal and the non-coherently decoded signal;
determine a first confidence value for the coherently decoded signal and determine a second confidence value for the non-coherently decoded signal; and
if the first confidence value is higher than the second confidence value, then the selector is configured to provide the coherently decoded signal as an output stream; or
if the second confidence value is higher than the first confidence value, then the selector is configured to provide the non-coherently decoded signal as the output stream.

2. The RF communication system of claim 1, wherein the RF communication system also comprises an ADC, wherein:
the ADC is configured to receive the load modulation signal from the input terminal; and
the ADC is configured to provide a digital version of the load modulation signal to the coherent decoder and the non-coherent decoder.

3. The RF communication system of any preceding claim, wherein if the first confidence value is equal to the second confidence value, then the selector is configured to provide the coherently decoded signal as the output stream.

4. The RF communication system of any preceding claim, wherein the selector is configured to determine the first and second confidence values based on one or more of:
a parity check of each of the coherently decoded signal and the non-coherently decoded signal;
an amplitude of the load modulation signal;
a degree of similarity between a section of each of the coherently decoded signal and the non-coherently decoded signal and an expected section of an expected signal; and
a cyclic redundancy check of each of the coherently decoded signal and the non-coherently decoded signal.

5. The RF communication system of any preceding claim, wherein the non-coherent decoder is an edge detector.

6. The RF communication system of any preceding claim, wherein the non-coherent decoder is an envelope detector.

7. The RF communication system of any preceding claim, wherein the selector is configured to continuously determine and compare the first and second confidence values such that the selector can change the output stream from one decoded signal to the other decoded signal immediately if there is a change in which of the confidence values is higher.

8. The RF communication system of any preceding claim, wherein the RF communication system is an NFC communication device.

9. A method of operating a radio-frequency, RF, communication system for near field communication, NFC, wherein the method comprises:
applying a coherent decoding operation to a load modulation signal in order to provide a coherently decoded signal;
applying a non-coherent decoding operation to the load modulation signal in order to provide a non-coherently decoded signal;
determining a first confidence value for the coherently decoded signal and determining a second confidence value for the non-coherently decoded signal; and
if the first confidence value is higher than the second confidence value, then providing the coherently decoded signal as an output stream; or
if the second confidence value is higher than the first confidence value, then providing the non-coherently decoded signal as the output stream.

10. The method of claim 9, further comprising:
converting the load modulation signal from an analogue signal to a digital version of the load modulation signal; and
applying the coherent decoding operation and the non-coherent decoding operation to the digital version of the load modulation signal.

11. The method of any of claims 9-10, wherein if the first confidence value is equal to the second confidence value, then the method further comprises providing the coherently decoded signal as the output stream.

12. The method of any of claims 9-11, wherein the step of determining the first and second confidence values includes determining the first and second confidence values based on one or more of:
a parity check of each of the coherently decoded signal and the non-coherently decoded signal;
an amplitude of the load modulation signal;
a degree of similarity between a section of each of the coherently decoded signal and the non-coherently decoded signal and an expected section of an expected signal; and
a cyclic redundancy check of each of the coherently decoded signal and the non-coherently decoded signal.

13. The method of any of claims 9-12, wherein the non-coherent decoding operation is an edge detection operation.

14. The method of any of claims 9-13, wherein the non-coherent decoding operation is an envelope detection operation.

15. The method of any of claims 9-14, wherein the method further comprises continuously determining and comparing the first and second confidence values and changing the output stream from one decoded signal to the other decoded signal immediately if there is a change in which of the confidence values is higher.

## Amended claims

### Amended claims in accordance with Rule 137(2) EPC.

1. A radio-frequency, RF, communication system (200) for near field communication, NFC, the system comprising:
an input terminal (201) configured to receive a load modulation signal from an NFC tag, wherein the NFC tag is configured to provide the load modulation signal by modulating a carrier signal of the RF communication system;
a coherent decoder (202) configured to apply a coherent decoding operation to the load modulation signal in order to provide a coherently decoded signal;
a non-coherent decoder (203) configured to apply a non-coherent decoding operation to the load modulation signal in order to provide a non-coherently decoded signal; and
a selector (204) configured to:
receive the coherently decoded signal and the non-coherently decoded signal;
determine a first confidence value for the coherently decoded signal and determine a second confidence value for the non-coherently decoded signal; and
if the first confidence value is higher than the second confidence value, then the selector (204) is configured to provide the coherently decoded signal as an output stream; or
if the second confidence value is higher than the first confidence value, then the selector (204) is configured to provide the non-coherently decoded signal as the output stream.

2. The RF communication system (200) of claim 1, wherein the RF communication system also comprises an analogue to digital converter, ADC, (205), wherein:
the ADC (205) is configured to receive the load modulation signal from the input terminal (201); and
the ADC (205) is configured to provide a digital version of the load modulation signal to the coherent decoder (202) and the non-coherent decoder (203).

3. The RF communication system (200) of any preceding claim, wherein if the first confidence value is equal to the second confidence value, then the selector (204) is configured to provide the coherently decoded signal as the output stream.

4. The RF communication system (200) of any preceding claim, wherein the selector (204) is configured to determine the first and second confidence values based on one or more of:
a parity check of each of the coherently decoded signal and the non-coherently decoded signal;
an amplitude of the load modulation signal;
a degree of similarity between a section of each of the coherently decoded signal and the non-coherently decoded signal and an expected section of an expected signal; and
a cyclic redundancy check of each of the coherently decoded signal and the non-coherently decoded signal.

5. The RF communication system (200) of any preceding claim, wherein the non-coherent decoder (202) is an edge detector.

6. The RF communication system (200) of any preceding claim, wherein the non-coherent decoder (203) comprises an envelope detector (208).

7. The RF communication system (200) of any preceding claim, wherein the selector (204) is configured to continuously determine and compare the first and second confidence values such that the selector can change the output stream from one decoded signal to the other decoded signal immediately if there is a change in which of the confidence values is higher.

8. The RF communication system (200) of any preceding claim, wherein the RF communication system is an NFC communication device.

9. A method (520) of operating a radio-frequency, RF, communication system (200) for near field communication, NFC, wherein the method comprises:
applying (521) a coherent decoding operation to a load modulation signal in order to provide a coherently decoded signal;
applying (522) a non-coherent decoding operation to the load modulation signal in order to provide a non-coherently decoded signal;
determining (523) a first confidence value for the coherently decoded signal and determining (524) a second confidence value for the non-coherently decoded signal; and
if (525) the first confidence value is higher than the second confidence value, then providing (526) the coherently decoded signal as an output stream; or
if (527) the second confidence value is higher than the first confidence value, then providing (528) the non-coherently decoded signal as the output stream.

10. The method (520) of claim 9, further comprising:
converting the load modulation signal from an analogue signal to a digital version of the load modulation signal; and
applying the coherent decoding operation and the non-coherent decoding operation to the digital version of the load modulation signal.

11. The method (520) of any of claims 9-10, wherein if the first confidence value is equal to the second confidence value, then the method further comprises providing the coherently decoded signal as the output stream.

12. The method (520) of any of claims 9-11, wherein the steps of determining (523, 524) the first and second confidence values includes determining the first and second confidence values based on one or more of:
a parity check of each of the coherently decoded signal and the non-coherently decoded signal;
an amplitude of the load modulation signal;
a degree of similarity between a section of each of the coherently decoded signal and the non-coherently decoded signal and an expected section of an expected signal; and
a cyclic redundancy check of each of the coherently decoded signal and the non-coherently decoded signal.

13. The method (520) of any of claims 9-12, wherein the non-coherent decoding operation is an edge detection operation.

14. The method (520) of any of claims 9-13, wherein the non-coherent decoding operation is an envelope detection operation.

15. The method (520) of any of claims 9-14, wherein the method further comprises continuously determining and comparing the first and second confidence values and changing the output stream from one decoded signal to the other decoded signal immediately if there is a change in which of the confidence values is higher.
